# EUROPÄISCHE PATENTSCHRIFT

(11) **EP 3 498 111 B1**
(45) Veröffentlichungstag und Bekanntmachung des Hinweises auf die Patenterteilung: **06.07.2022**
(21) Anmeldenummer: 17207023.7
(22) Anmeldetag: 13.12.2017
(51) Int. Cl.: A24C 5/18, B65G 15/08, B65G 15/40

(54) **FORMATBAND**
FORMAT TAPE
BANDE DE GARNITURE

(43) Veröffentlichungstag der Anmeldung: 19.06.2019
(73) Patentinhaber: Max Schlatterer GmbH & Co. KG, 89542 Herbrechtingen (DE)
(72) Erfinder: Renner, Stefan, 89584 Ehingen (DE); Bez, Frank, 73566 Bartholomä (DE); Wagner, Andreas, 89564 Nattheim (DE)
(74) Vertreter: Schmid, Wolfgang

(56) Entgegenhaltungen:
- DE-A1-102010 051 894
- DE-A1-102015 014 716
- DE-C1- 4 326 281
- US-A- 2 432 938

## Beschreibung

Die Erfindung betrifft ein Formatband zur Herstellung von Zigaretten oder Filtern für Zigaretten nach der im Oberbegriff von Anspruch 1 näher definierten Art. Des Weiteren betrifft die Erfindung ein Format zur Herstellung von Zigaretten oder Filtern für Zigaretten sowie ein Verfahren zur Herstellung eines solchen Formatbands.

Ein gattungsgemäßes Formatband ist in der DE 10 2014 102 120 A1 beschrieben.

Ein gattungsgemäßes Format ist aus der US 2 432 938 A bekannt. Weitere Formate sind beispielsweise aus der DE 10 2010 051 894 A1, DE 40 06 843 C2, DE 10 2009 009 829 A1, DE 10 2012 204 442 A1, DE 10 2013 222 055 A1, EP 2 679 104 A1 oder DE 10 2015 122 550 A1 bekannt.

Die bekannten Formatbänder sind grundsätzlich zur Herstellung von Zigaretten oder Filtern für Zigaretten geeignet. Es besteht jedoch teilweise ein Bedürfnis nach Formatbändern, die auch weitergehende Funktionen aufweisen.

Es ist daher Aufgabe der vorliegenden Erfindung, ein Formatband zur Herstellung von Zigaretten oder Filtern für Zigaretten, ein Format zur Herstellung von Zigaretten oder Filtern für Zigaretten sowie ein Verfahren zur Herstellung desselben zu schaffen, die in der Lage sind, zusätzliche Funktionen zu übernehmen.

Erfindungsgemäß wird diese Aufgabe durch die in Anspruch 1 genannten Merkmale gelöst.

Das erfindungsgemäße Formatband mit dem wenigstens einen Führungselement auf der dem herzustellenden Produkt abgewandten Seite ermöglicht eine sehr einfache Führung des Formatbands in einem zur Herstellung von Zigaretten oder Filtern für Zigaretten vorgesehenen Format. Dadurch kann beispielsweise eine sehr exakte Führung des Formatbands in einer bestimmten Position relativ zu dem Format, zum Beispiel in der Mitte des Formats, erreicht werden.

Durch die verbesserte Führung des Formatbands können Probleme, wie zum Beispiel ein Taumeln des Bands, vermieden bzw. verringert werden. Des Weiteren kann durch diese bessere Führung des Formatbands gegenüber dem Format auch der Verschleiß des Formatbands, insbesondere im Bereich der Bandkanten, verringert werden.

Eine weitere Anwendung des erfindungsgemäßen Formatbands besteht beispielsweise in Fällen, in denen das Formatband einer bestimmten Kurve oder einem anderen Pfad folgen soll, da eine derartige Führung des Formatbands mit Hilfe des wenigstens einen Führungselements in einfacher Weise möglich ist.

Eine besonders einfach herstellbare und eine zuverlässige Führung des Formatbands gewährleistende Ausführungsform ergibt sich, wenn das Führungselement über wenigstens annähernd die gesamte Länge des Formatbands verläuft.

Alternativ dazu kann auch vorgesehen sein, dass einzelne, voneinander beabstandete Führungselemente vorgesehen sind. Zum einen kann auf diese Weise Material eingespart werden und es lassen sich zum anderen verschiedene weitere Aufgaben mit einem derartigen Formatband erfüllen.

Beispielsweise kann in diesem Zusammenhang vorgesehen sein, dass wenigstens einige der Führungselemente zahnartig ausgebildet sind. Dadurch lässt sich ein im Prinzip schlupffreier Antrieb des Formatbands erreichen.

Um eine sichere Führung des Formatbands zu erreichen, kann des Weiteren vorgesehen sein, dass das wenigstens eine Führungselement als Vorsprung ausgebildet ist.

In einer weiteren vorteilhaften Ausgestaltung der Erfindung kann vorgesehen sein, dass die Höhe des wenigstens einen Führungselements senkrecht zu einer Ebene, in der sich das Formatband erstreckt, 1 bis 7 mm, vorzugsweise 1 bis 5 mm, besonders bevorzugt 1 bis 3 mm, beträgt. Dadurch ist zum einen eine zuverlässige Führung des Formatbands in dem Format gewährleistet und es ist zum anderen sichergestellt, dass die Flexibilität des Formatbands nicht negativ beeinflusst wird. Ein weiterer Vorteil dieser Lösung besteht in dem vergleichsweise geringen Materialverbrauch zur Erzeugung des wenigstens einen Führungselements.

In bestimmten Anwendungsfällen kann es vorteilhaft sein, wenn das wenigstens eine Führungselement als Vertiefung ausgebildet ist. Auch auf diese Weise lässt sich eine sehr gute Führung desselben erreichen.

Eine weitere vorteilhafte Ausgestaltung der Erfindung kann darin bestehen, dass die Breite des wenigstens einen Führungselements in Querrichtung des Formatbands 1 bis 20 mm, vorzugsweise 1 bis 10 mm, beträgt. Wenn die Breite des wenigstens einen Führungselements in dem genannten Bereich liegt, so wird einerseits eine gute Führung in dem Format gewährleistet und andererseits eine zu hohe Steifigkeit und ein zu hoher Materialverbrauch verhindert.

In einer weiteren vorteilhaften Ausgestaltung der Erfindung kann vorgesehen sein, dass das wenigstens eine Führungselement mittels Vergießen mit dem Formatband verbunden ist. Auf diese Weise lässt sich das erfindungsgemäße Formatband besonders einfach herstellen. Dabei ist sowohl ein Vergießen des wenigstens einen Führungselements mit einem bereits zuvor hergestellten Formatband als auch ein einteiliges Herstellen des Formatbands mit dem wenigstens einen Führungselement mittels Vergießen möglich. Alternativ dazu kann auch vorgesehen sein, dass das wenigstens eine Führungselement mittels Verkleben, Vernähen und/oder Verschweißen mit dem Formatband verbunden ist.

Eine weitere Möglichkeit zur Bildung des Formatbands kann darin bestehen, dass das Formatband ein Gewebe mit Kettfäden und Schussfäden aufweist, wobei das wenigstens eine Führungselement mittels zusätzlicher Kettfäden gebildet ist. Wenn dabei eine geeignete Bindungsart gewählt wird, stellt dies möglicherweise eine sehr kostengünstige Variante des Formatbands mit dem wenigstens einen Führungselement dar.

In Anspruch 11 ist ein Format zur Herstellung von Zigaretten oder Filtern für Zigaretten mit wenigstens einer Ausnehmung für das Formatband angegeben.

Durch die erfindungsgemäße wenigstens eine in Laufrichtung des Formatbands verlaufende Ausnehmung ist es möglich, ein erfindungsgemäßes Formatband in diesem Format zu führen.

Besonders vorteilhaft ist ein derartiges Format, da in der wenigstens einen Ausnehmung ein erfindungsgemäßes Formatband geführt ist.

Ein Verfahren zur Herstellung eines Formatbands ist in Anspruch 12 angegeben.

Mit einem solchen Verfahren kann das erfindungsgemäße Formatband auf besonders einfache Weise hergestellt werden.

In einer sehr vorteilhaften Weiterbildung des Verfahrens kann vorgesehen sein, dass das wenigstens eine Führungselement mittels Vergießen mit dem Formatband verbunden wird. Auf diese Weise lässt sich das erfindungsgemäße Formatband besonders einfach herstellen. Dabei ist sowohl ein Vergießen des wenigstens einen Führungselements mit einem bereits zuvor hergestellten Formatband als auch ein einteiliges Herstellen des Formatbands mit dem wenigstens einen Führungselement mittels Vergießen möglich.

Nachfolgend sind Ausführungsbeispiele der Erfindung anhand der Zeichnung prinzipmäßig dargestellt.

Es zeigt:
- Fig. 1: eine sehr schematische Ansicht einer ersten Ausführungsform eines erfindungsgemäßen Formatbands;
- Fig. 2: eine sehr schematische Ansicht einer zweiten Ausführungsform des erfindungsgemäßen Formatbands;
- Fig. 3: einen Schnitt nach der Linie III-III aus Fig. 1;
- Fig. 4: eine alternative Ausführungsform des erfindungsgemäßen Formatbands zu der Darstellung gemäß Fig. 3;
- Fig. 5: eine sehr schematische Ansicht einer dritten Ausführungsform des erfindungsgemäßen Formatbands;
- Fig. 6: eine sehr schematische Ansicht einer vierten Ausführungsform des erfindungsgemäßen Formatbands;
- Fig. 7: ein erfindungsgemäßes Format mit einem darin geführten erfindungsgemäßen Formatband; und
- Fig. 8: eine weitere Ausführungsform eines erfindungsgemäßen Formats.

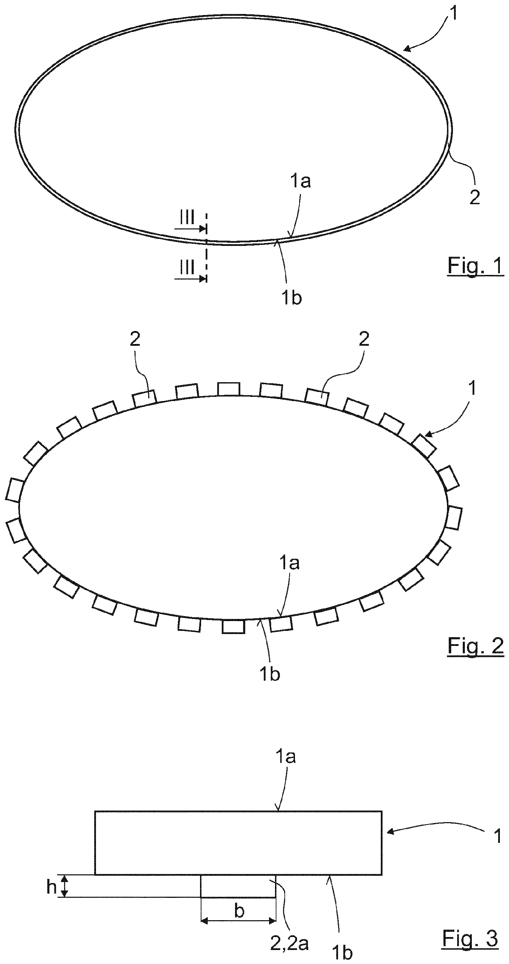

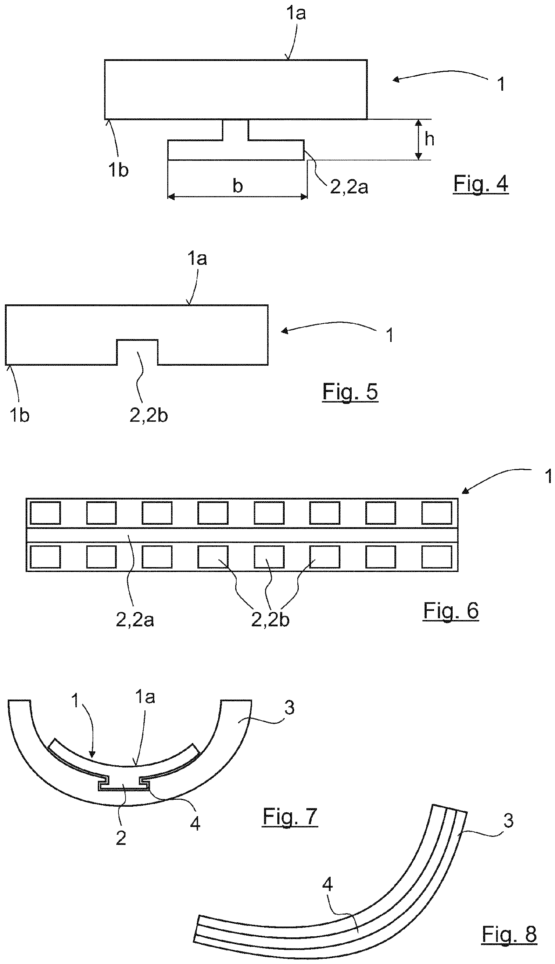

Fig. 1 zeigt ein Formatband 1, das für die Herstellung von Zigaretten, Filtern für Zigaretten oder ähnliche Produkte vorgesehen ist. Das Formatband 1 weist eine dem in Fig. 1 nicht dargestellten Produkt zugewandte Seite 1a und eine von dem herzustellenden Produkt abgewandte Seite 1b auf. Auf der dem herzustellenden Produkt abgewandten Seite 1b weist das Formatband 1 wenigstens ein Führungselement 2 zur Führung des Formatbands 1 in einem in den Figuren 7 und 8 dargestellten Format 3 bzw. in wenigstens einer Ausnehmung 4 des Formats 3 auf.

In der in Fig. 1 dargestellten Ausführungsform verläuft das Führungselement 2 über wenigstens annähernd die gesamte Länge des Formatbands 1. Konkret verläuft das Führungselement 2 bei der Ausführungsform von Fig. 1 über die gesamte Länge bzw. den gesamten Umfang des Formatbands 1.

Demgegenüber weist das in Fig. 2 dargestellte Formatband 1 mehrere einzelne, voneinander beabstandete Führungselemente 2 auf. Hierbei sollte der Abstand zwischen den einzelnen Führungselementen 2 geringer sein als die Länge der Ausnehmung 4 des Formats 3, so dass sichergestellt ist, dass das Formatband 1 nicht ungewollt aus dem Format 3 rutschen kann.

Wenn dabei wenigstens einige der Führungselemente 2 zahnartig ausgebildet sind, so lässt sich das Formatband 1 mittels einer nicht dargestellten Zahnscheibe oder einer ähnlichen Einrichtung antreiben. In diesem Fall können die als Zähne ausgeführten Führungselemente 2 auch über die gesamte Breite des Formatbands 1 verlaufen. Dabei ist die Breite der Ausnehmung 4 geringfügig größer als die Breite b des Führungselements 2, um ein Klemmen des Formatbands 1 in dem Format 3 zu verhindern.

In den Figuren 3 und 4 sind zwei beispielhafte Ausführungsformen des Führungselements 2 dargestellt. Bei der Ausführungsform von Fig. 3 handelt es sich bei dem Führungselement 2 um einen Vorsprung 2a, der einen im Wesentlichen rechteckigen Querschnitt aufweist. Grundsätzlich sind die unterschiedlichsten Querschnitte des Führungselements 2 denkbar, d. h. dasselbe muss nicht notwendigerweise einen rechteckigen Querschnitt aufweisen. Vielmehr kann, insbesondere wenn eine Vielzahl von Führungselementen 2 vorgesehen ist, diese auch in Tropfenform auf das Formatband 1 aufgebracht werden. Des Weiteren ist in der Ausführungsform von Fig. 3 erkennbar, dass das wenigstens eine Führungselement 2 in Querrichtung y des Formatbands 1 wenigstens annähernd mittig angeordnet ist, wodurch sich eine gute Zentrierung für das Formatband ergibt. Dies ist jedoch nicht unbedingt erforderlich. Für bestimmte Anwendungen könnte es durchaus sinnvoll sein, das Führungselement 2 in Querrichtung y des Formatbands 1 außerhalb der Mitte anzuordnen.

Beispielsweise kann die Höhe h des als Vorsprung 2a ausgebildeten Führungselements 2 senkrecht zu einer Ebene, in der sich das Formatband 1 erstreckt, 1 bis 7 mm, vorzugsweise 1 bis 5 mm, besonders bevorzugt 1 bis 3 mm, betragen. Insbesondere gilt dies, wenn das Formatband 1 eine Dicke von 0,5 bis 0,8 mm aufweist.

Die Breite b des wenigstens einen Führungselements 2 in der mit "y" bezeichneten Querrichtung kann 1 bis 20 mm, vorzugsweise 1 bis 10 mm, betragen. Dies gilt insbesondere, wenn das Formatband 1 eine Breite zwischen 8 und 25 mm aufweist. Hierbei sollte ein gewisses Verhältnis zwischen der Breite b des Führungselements 2 und der Breite des Formatbands 1 eingehalten werden. Selbstverständlich muss das Führungselement 2 eine geringere Breite b als das Formatband 1 aufweisen. Wenn das Führungselement 2 dünner, d.h. weniger hoch, ausgebildet ist, kann es auch lediglich 1 bis 2 mm schmaler als das Formatband 1 ausgeführt werden.

Bei der Ausführungsform von Fig. 4 ist das Führungselement 2 ebenfalls als Vorsprung 2a ausgebildet. Im Unterscheid zu Fig. 3 ist es jedoch T-förmig ausgeführt und bildet somit eine Hinterschneidung, die einen besseren Halt des Führungselements 2 innerhalb der Ausnehmung 4 des Formats 3 ermöglicht. Durch diese Hinterschneidung des Führungselements 2 kann auf ansonsten möglicherweise notwendige Niederhalter oder ähnliches verzichtet werden. Die oben genannten Maße bezüglich der Höhe h und der Breite b des Führungselements 2 sind auch für die Ausführungsform von Fig. 4 anwendbar.

Das wenigstens eine, als Vorsprung 2a ausgebildete Führungselement 2 kann auf verschiedene Arten mit dem Formatband 1 verbunden sein. Beispielsweise kann das Führungselement 2 mittels Vergießen mit dem Formatband 1 verbunden werden. Durch ein solches Vergießen des Führungselements 2 mit dem Formatband 1 ergibt sich eine sehr exakte Positionierung des Führungselements 2 gegenüber dem Formatband 1. Insbesondere wenn das Formatband 1 aus einem Gewebe gebildet ist, ergibt sich beim Vergießen des Führungselements 2 mit dem Formatband 1 eine mechanische Verbindung in Form einer Verklammerung zwischen dem Führungselement 2 und dem Formatband 1.

Alternativ dazu ist es auch möglich, das wenigstens eine Führungselement 2 mittels Verkleben, Vernähen und/oder Verschweißen mit dem Formatband 1 zu verbinden.

Eine weitere Möglichkeit besteht in dem Fall, in dem das Formatband 1 in nicht dargestellter Weise ein Gewebe mit Kettfäden und Schussfäden aufweist, das wenigstens ein Führungselement 2 durch zusätzliche Kettfäden zu bilden. Dabei ist es möglich, für die zusätzlichen Kettfäden ein anderes, gegebenenfalls verschleißfesteres Material zu verwenden, um die Verschleißfestigkeit des Führungselements 2 zu verbessern. Grundsätzlich ist zur Verbindung dieser zusätzlichen Kettfäden mit dem eigentlichen Gewebe auch ein anderes Webverfahren als dasjenige, mit dem das Gewebe des Formatbands 1 hergestellt wurde, denkbar. Dabei sind zur Herstellung des Formatbands 1 die unterschiedlichsten Webverfahren denkbar.

Alternativ zu der Verwendung eines Gewebes ist es auch möglich, das Formatband 1 aus einer Folie oder einem ähnlichen Material herzustellen. Beispielsweise kann das Formatband 1 mit dem Führungselement 2 auch durch Stranggießen hergestellt werden.

Im Hinblick auf die Dauerhaltbarkeit und die einfache Fertigung des Formatbands 1 können das Formatband 1 und/oder das wenigstens eine Führungselement 2 aus einem Kunststoffmaterial, zum Beispiel PEEK, gebildet sein.

In Fig. 5 ist eine weitere Ausführungsform des Formatbands 1 dargestellt. Hierbei ist das Führungselement 2 als Vertiefung 2b ausgebildet, das vorzugsweise über wenigstens annähernd die gesamte Länge des Formatbands 1 verlaufen sollte. Auch mit der Vertiefung 2b als Führungselement 2 ist eine Führung des Formatbands 1 in dem Format 3 möglich. Allerdings sollte das Format 3 in diesem Fall statt der Ausnehmung 4 wenigstens eine nicht dargestellte Erhöhung aufweisen, die an die Form des als Vertiefung 2b ausgebildeten Führungselement 2 angepasst sein sollte.

Für die Breite der Vertiefung 2b gilt im Prinzip das für die Breite des Vorsprungs 2a ausgesagte. Die Tiefe der Vertiefung 2b sollte so gewählt werden, dass das Formatband 1 im Bereich der Vertiefung 2b noch eine ausreichende Festigkeit aufweist.

Fig. 6 zeigt eine weitere Ausführungsform des Formatbands 1. Dabei sind eine durchgehende Vertiefung 2b sowie einzelne Vorsprünge 2a als Führungselemente 2 vorgesehen, die eine Führung des Formatbands 1 in einem entsprechend ausgeführten Format 3 ermöglichen. Die Vorsprünge 2a können dabei so ausgelegt sein, dass sie, ähnlich der in Fig. 2 dargestellten Ausführungsform, dem Formatband 1 einen zahnartigen Charakter verleihen. Selbstverständlich ist die in Fig. 6 dargestellte Ausführungsform des Formatbands 1 auch umgekehrt denkbar, d.h. mit einem durchgehenden Vorsprung 2a und einzelnen Vertiefungen 2b.

In den Figuren 7 und 8 ist eine Ausführungsform des Formats 3 zur Herstellung von Zigaretten oder Filtern für Zigaretten dargestellt. Dieses weist neben einer nicht bezeichneten Ausnehmung zur Aufnahme des Formatbands 1 über dessen gesamte Breite auch die Ausnehmung 4 zur Aufnahme des Führungselements 2 des Formatbands 1 auf. In Fig. 7 ist erkennbar, dass die Ausnehmung 4 analog zu der Ausführung des Führungselements 2 eine T-Form aufweist und es ist erkennbar, dass durch die T-Form des Führungselements 2 und der Ausnehmung 4 sich eine solche Führung des Formatbands 1 in dem Format 3 ergibt, dass das Formatband 1 nicht von dem Format 3 abheben kann.

Selbstverständlich kann das Format 3 auch jede andere Art bzw. Form der Ausnehmung 4 aufweisen, die jeweils an die Form und Größe des wenigstens einen Führungselements 2 angepasst sein sollte.

In Fig. 8 ist eine weitere Ausführungsform des Formats 3 dargestellt, bei dem dasselbe eine Krümmung aufweist. Durch die Führung des Formatbands 1 mittels des Führungselements 2 in der Ausnehmung 4 des Formats 3 kann das Formatband 1 dieser Krümmung problemlos folgen, so dass sich eine entsprechend gute Führung des Formatbands 1 innerhalb des Formats 3 ergibt und dieses um Kurven geführt werden kann. Auch eine Führung des Formatbands 1 in mehreren Raumrichtungen ist denkbar. Die nutförmige Ausnehmung 4 kann bei der Ausführungsform von Fig. 6 ebenfalls T-förmig ausgeführt sein. Grundsätzlich ist es zu bevorzugen, wenn der Querschnitt der Ausnehmung 4 so gut wie möglich an den Querschnitt des Führungselements 2 angepasst ist, da sich auf diese Weise eine bessere Führung des Führungselements 2 in dem Format 3 ergibt.

In ähnlicher Weise wie die Ausnehmung 4 des Formats 3 können auch Umlenkrollen und weitere, für die Führung des Formatbands 1 verwendete Bauteile, eine ähnliche Ausnehmung aufweisen. Diese Bauteile sind hierin jedoch nicht dargestellt.

## Patentansprüche

1. Formatband (1) zur Herstellung von Zigaretten oder Filtern für Zigaretten, mit einer dem herzustellen Produkt zugewandten Seite (1a) und mit einer von dem herzustellenden Produkt abgewandten Seite (1b),
**dadurch gekennzeichnet, dass** sich auf der dem herzustellenden Produkt abgewandten Seite (1b) wenigstens ein Führungselement (2) zur Führung des Formatbands (1) in einem Format (3) befindet.

2. Formatband nach Anspruch 1,
**dadurch gekennzeichnet, dass** das Führungselement (2) über wenigstens annähernd die gesamte Länge des Formatbands (1) verläuft.

3. Formatband nach Anspruch 1,
**dadurch gekennzeichnet, dass** einzelne, voneinander beabstandete Führungselemente (2) vorgesehen sind.

4. Formatband nach Anspruch 3,
**dadurch gekennzeichnet, dass** wenigstens einige der Führungselemente (2) zahnartig ausgebildet sind.

5. Formatband nach einem der Ansprüche 1 bis 4,
**dadurch gekennzeichnet, dass** das wenigstens eine Führungselement (2) als Vorsprung (2a) ausgebildet ist.

6. Formatband nach Anspruch 5,
**dadurch gekennzeichnet, dass** die Höhe (h) des wenigstens einen Führungselements (2) senkrecht zu einer Ebene, in der sich das Formatband (1) erstreckt, 1 bis 7 mm, vorzugsweise 1 bis 5 mm, besonders bevorzugt 1 bis 3 mm, beträgt.

7. Formatband nach einem der Ansprüche 1 bis 4,
**dadurch gekennzeichnet, dass** das wenigstens eine Führungselement (2) als Vertiefung (2b) ausgebildet ist.

8. Formatband nach einem der Ansprüche 1 bis 7,
**dadurch gekennzeichnet, dass** die Breite (b) des wenigstens einen Führungselements (2) in Querrichtung (y) des Formatbands (1) 1 bis 20 mm, vorzugsweise 1 bis 10 mm, beträgt.

9. Formatband nach einem der Ansprüche 1 bis 8,
**dadurch gekennzeichnet, dass** das wenigstens eine Führungselement (2) mittels Vergießen, Verkleben, Vernähen und/oder Verschweißen mit dem Formatband (1) verbunden ist.

10. Formatband nach einem der Ansprüche 1 bis 8,
**dadurch gekennzeichnet, dass** das Formatband (1) ein Gewebe mit Kettfäden und Schussfäden aufweist, wobei das wenigstens eine Führungselement (2) mittels zusätzlicher Kettfäden gebildet ist.

11. Format (3) zur Herstellung von Zigaretten oder Filtern für Zigaretten, mit einer Ausnehmung zur Aufnahme eines Formatbands (1), wobei die Ausnehmung wenigstens eine in Laufrichtung (x) des Formatbands (1) verlaufende Ausnehmung (4) zur Aufnahme eines Führungselements (2) des Formatbands (1) aufweist, wobei
die Ausnehmung (4) im Querschnitt eine T-Form aufweist, und mit einem in der Ausnehmung (4) geführten Formatband (1) nach einem der Ansprüche 1 bis 10, wobei das Führungselement (2) des Formatbands (1) im Querschnitt eine T-Form aufweist.

12. Verfahren zur Herstellung eines Formatbands (1) zur Herstellung von Zigaretten oder Filtern für Zigaretten, wobei ein Formatband (1) mit einer dem herzustellenden Produkt zugewandten Seite (1a) und mit einer von dem herzustellenden Produkt abgewandten Seite (1b) hergestellt wird,
**dadurch gekennzeichnet, dass** auf der dem herzustellenden Produkt abgewandten Seite (1b) des Formatbands (1) wenigstens ein Führungselement (2) zur Führung des Formatbands (1) in einem Format (3) erzeugt wird.

13. Verfahren nach Anspruch 12,
**dadurch gekennzeichnet, dass** das wenigstens eine Führungselement (2) mittels Vergießen mit dem Formatband (1) verbunden wird.

## Claims

1. Garniture tape (1) for producing cigarettes or filters for cigarettes, having a side (1a) which faces towards the product to be produced and having a side (1b) which faces away from the product to be produced,
**characterized in that**
at least one guide element (2) for guiding the garniture tape (1) in a garniture (3) is located on the side (1b) which faces away from the product to be produced.

2. Garniture tape according to Claim 1,
**characterized in that**
the guide element (2) runs along at least approximately the entire length of the garniture tape (1).

3. Garniture tape according to Claim 1,
**characterized in that**
individual guide elements (2) which are spaced apart from one another are provided.

4. Garniture tape according to Claim 3,
**characterized in that**
at least some of the guide elements (2) are of toothlike configuration.

5. Garniture tape according to one of Claims 1 to 4,
**characterized in that**
the at least one guide element (2) is configured in the form of a protrusion (2a).

6. Garniture tape according to Claim 5,
**characterized in that**
the height (h) of the at least one guide element (2) perpendicular to a plane in which the garniture tape (1) extends is 1 to 7 mm, preferably 1 to 5 mm, particularly preferably 1 to 3 mm.

7. Garniture tape according to one of Claims 1 to 4,
**characterized in that**
the at least one guide element (2) is configured in the form of an indentation (2b).

8. Garniture tape according to one of Claims 1 to 7,
**characterized in that**
the width (b) of the at least one guide element (2) in a transverse direction (y) of the garniture tape (1) is 1 to 20 mm, preferably 1 to 10 mm.

9. Garniture tape according to one of Claims 1 to 8,
**characterized in that**
the at least one guide element (2) is connected to the garniture tape (1) by means of casting, adhesive bonding, sewing and/or welding.

10. Garniture tape according to one of Claims 1 to 8,
**characterized in that**
the garniture tape (1) comprises a woven fabric having warp threads and weft threads, wherein the at least one guide element (2) is formed by means of additional warp threads.

11. Garniture (3) for producing cigarettes or filters for cigarettes, having a recess for receiving a garniture tape (1), wherein the recess comprises at least one recess (4) which runs in a running direction (x) of the garniture tape (1) and which is intended to receive a guide element (2) of the garniture tape (1), wherein
the recess (4) has a T shape in cross section, and having a garniture tape (1) according to one of Claims 1 to 10 which is guided in the recess (4), wherein the guide element (2) of the garniture tape (1) has a T shape in cross section.

12. Method for producing a garniture tape (1) for producing cigarettes or filters for cigarettes, wherein a garniture tape (1) having a side (1a) which faces towards the product to be produced and having a side (1b) which faces away from the product to be produced is produced,
**characterized in that**
at least one guide element (2) for guiding the garniture tape (1) in a garniture (3) is generated on the side (1b) of the garniture tape (1) which faces away from the product to be produced.

13. Method according to Claim 12,
**characterized in that**
the at least one guide element (2) is connected to the garniture tape (1) by means of casting.

## Revendications

1. Bande de garniture (1) pour la fabrication de cigarettes ou de filtres pour cigarettes, avec une face orientée vers le produit à fabriquer (1a) et une face opposée au produit à fabriquer (1b),
**caractérisée**
**en ce que** sur la face opposée au produit à fabriquer (1b) se trouve au moins un élément de guidage (2) pour le guidage de la bande de garniture (1) dans une garniture (3).

2. Bande de garniture selon la revendication 1
**caractérisée**
**en ce que** l'élément de guidage (2) court sur au moins sensiblement la totalité de la longueur de la bande de garniture (1).

3. Bande de garniture selon la revendication 1
**caractérisé**
**en ce que** des éléments de guidage (2) individuels espacés les uns des autres sont prévus.

4. Bande de garniture selon la revendication 3
**caractérisée**
**en ce qu'**au moins certains des éléments de guidage (2) sont configurés en forme de dents.

5. Bande de garniture selon une des revendications 1 à 4
**caractérisée**
**en ce qu'**au moins un élément de guidage (2) est configuré comme une saillie (2a).

6. Bande de garniture selon la revendication 5
**caractérisée**
**en ce que** la hauteur (h) de l'au moins un élément de guidage (2) perpendiculairement à un plan dans lequel la bande de garniture (1) s'étend est de 1 à 7 mm, de préférence de 1 à 5 mm, de façon particulièrement préférée de 1 à 3 mm.

7. Bande de garniture selon une des revendications 1 à 4
**caractérisée**
**en ce qu'**au moins un élément de guidage (2) est configuré comme un renfoncement (2b).

8. Bande de garniture selon une des revendications 1 à 7
**caractérisée**
**en ce que** la largeur (b) de l'au moins un élément de guidage (2) dans la direction transversale (y) de la bande de garniture (1) est de 1 à 20 mm, de préférence de 1 à 10 mm.

9. Bande de garniture selon une des revendications 1 à 8
**caractérisée**
**en ce qu'**au moins un élément de guidage (2) est relié à la bande de garniture (1) par coulage, collage, couture et/ou soudage.

10. Bande de garniture selon une des revendications 1 à 8
**caractérisée**
**en ce que** la bande de garniture (1) comporte un tissu avec des fils de chaîne et des fils de trame, l'au moins un élément de guidage (2) étant formé au moyen de fils de chaîne supplémentaires.

11. Garniture (3) pour la fabrication de cigarettes ou de filtres pour cigarettes, avec un logement pour recevoir une bande de garniture (1), le logement présentant au moins un logement (4) courant dans la direction de défilement (x) de la bande de garniture (1) pour recevoir un élément de guidage (2) de la bande de garniture (1), le logement (4) présentant une section en forme de T, et avec une bande de garniture (1) selon une des revendications 1 à 10 guidée dans le logement (4), l'élément de guidage (2) de la bande de garniture (1) présentant une section en forme de T.

12. Procédé de fabrication d'une bande de garniture (1) pour la fabrication de cigarettes ou de filtres pour cigarettes, selon lequel une bande de garniture (1) avec une face orientée vers le produit à fabriquer (1a) et une face opposée au produit à fabriquer (1b) est fabriquée
**caractérisé**
**en ce que** sur la face opposée au produit à fabriquer (1b) de la bande de garniture (1) est créé au moins un élément de guidage (2) pour le guidage de la bande de garniture (1) dans une garniture (3).

13. Procédé selon la revendication 12
**caractérisé**
**en ce qu'**au moins un élément de guidage (2) est relié à la bande de garniture (1) par coulage.
